Europäisches Patentamt

European Patent Office

Office européen des brevets

(19)

(11) Publication number: **0 219 311 B1**

# EUROPEAN PATENT SPECIFICATION

(12)

(45) Date of publication of patent specification: 27.03.91   (51) Int. Cl.⁵: **B60C 9/20**

(21) Application number: 86307793.9

(22) Date of filing: 09.10.86

(54) Motorcycle tyre.

(30) Priority: 14.10.85 JP 229613/85

(43) Date of publication of application:
22.04.87 Bulletin 87/17

(45) Publication of the grant of the patent:
27.03.91 Bulletin 91/13

(84) Designated Contracting States:
DE FR GB IT

(56) References cited:
BE-A- 670 909
FR-A- 1 538 478
FR-A- 2 261 888
FR-A- 2 386 423
US-A- 3 386 487

(73) Proprietor: SUMITOMO RUBBER INDUSTRIES,
CO. LTD
No. 1-1, Tsutsui-cho 1-chome
Chuo-ku Kobe-shi Hyogo-ken 651(JP)

(72) Inventor: Kadomaru, Kazou
5-A908 Nakahozumi 1-chome
Ibaragi-shi Osaka-fu(JP)
Inventor: Inoue, Yasuhiro Sumitomo Rubber
Industries Ltd.
1-1 Tsutsuicho 1-chome Chou-ku
Kobe-shi Hyogo-ken(JP)

(74) Representative: Stewart, Charles Geoffrey
SP TYRES UK LIMITED Tyre Technical Di-
vision
Fort Dunlop Birmingham B24 9QT(GB)

## Description

The present invention relates to a motorcycle tyre in which the maneuverability and the ride are improved without sacrificing durability in high speed running.

Motorcycle tyres are now required to have improved characteristics to accomodate high speed running resulting from the improvements in roads such as expressways and the like.

Generally, there has been widely employed in motorcycle tyres a carcass of a cross-ply structure, in which a plurality of carcass plies, each having cords at an angle of about 20° to 45° with respect to the circumferential direction of the tyre, intersect with each other. The reason is that motorcycle are basically different from four-wheel vehicles in cornering because then the motorcycle is tilted at a large angle to the plane perpendicular to the road surface. Accordingly, motorcycle tyres are required to have characteristics for stable cornering to generate in opposition to the centrifugal force on the motorcycle body a central force toward the direction in which the camber angle acts.

Because of this requirement the motorcycle tyres have a high lateral stiffness by means of the cross-ply carcass structure which withstands the camber thrust. Radial tyres have inferior lateral stiffness and so have so far scarcely been adopted for motorcycle tyres.

Cross-ply tyres, however, have drawbacks in that the body of the motorcycle is vibrated transversely during high-speed running due to the lateral stiffness of the tyre, and in addition the wear resistance is low. Accordingly, as countermeasures to such problems, it has been suggested to increase the lateral stiffness of a radial tyre whilst maintaining the excellent performance in high-speed running and good wear resistance. In such prior art radial tyres corresponding, to the preamble of claim 1 a belt layer is disposed outside the carcass to increase the durability in high speed running. Such belt layers, however, adversely affect the ride comfort and maneuverability and accordingly are not satisfactory alone.

An object of the present invention is to provide a motorcycle tyre, which has both the excellent maneuverability of a cross-ply tyre and the excellent characteristics of a radial tyre such as durability and performance in high speed running and good wear resistance.

Accordingly the invention provides a motorcycle tyre comprising the features of claim 1, particularly a pair of bead regions, a tread region forming a tyre crown region and a pair of sidewalls in which the carcass is reinforced by radial cords with the ends turned up around bead reinforcements, wherein a pair of reinforcing layers are provided disposed outside the carcass one at either side of the tyre and having their outer ends in the tyre crown region and inner ends between the tyre shoulders and the bead regions and a tread reinforcing band is provided radially outwards of the reinforcing layers and extending across the tread region comprising reinforcement cords laid at an angle less than 10° to the circumferential direction of the tyre.

The radially outer ends are preferably spread apart by a distance Wc 30% to 40% of the tread width.

The tread reinforcing band is preferably 20% to 70% of the tread width (Wt). The tread breaker band preferably overlaps each reinforcement layer by 5% to 20% of the tread width (Wt). The tread breaker band cords may be of nylon.

One embodiment will now be described with reference to the attached diagramatic drawing which is a cross section of a tyre.

The tyre shown comprises a tread region 2, side wall regions 3 extending radially inwardly from the both edges of the tread region 2, and two bead region 4 one positioned at the radially inward end of each of the sidewalls 3.

The tread region 2 has a ground engaging tread surface extending approxiamately parallel to the curved cross sectional configuration of the crown region of the tyre. The width (Wt) of the tread portion 2 exceeds the maximum width (Ws) of the tyre so that the camber thrust generated when the tyre is tilted severely is maintained.

A reinforced carcass 5 for the tyre of the invention is composed of two piles both ends of which are turned up around bead cores from the radially inside to outside. The plies terminate in the bead region 4. The turned up end 5a of the outer ply is positioned higher than the turned up end 5b of the inner ply so as to cover the turned up edge 5b, and thus reduce stress concentration at the turned up edges of the inner ply.

The cords of the carcass reinforcement 5 are laid substantially parallel to the radial direction of the tyre. By "substantially parallel" is meant that the cores are laid at an angle of not more than 10° to the radial direction of the tyre. The cord material is not critical and may be for example, organic fibres such as Nylon polyester, Rayon and/or Polyaramide fibres.

A pair of shoulder reinforcing layers 6,7 are disposed over the carcass 5. The radially outer ends 6a and 7a of the shoulder reinforcing layers are positioned in the crown part of the tyre and the radially inner ends 6b and 7b are positioned between the tread edge portion and the bead portion 4.

The space (Wc) between the radially outwards ends 6a and 7a of the pair of reinforcing layers 6 and 7 is 10 to 60%, more preferably 30 to 40% of the tread width (Wt) to provide in the tread centre region flexibility so that the stability in straight running is maximised.

The height (hf) of the radially inward ends 6b, 7b of the reinforcing layers 6,7 from the bead base is in the range of 10 to 70% of the section height (H) of the tyre.

The reinforcing layers 6 and 7 are at an angle of $20°$ to $50°$ to the circumferential direction and thus so that the shoulder region, side wall and the bead portions 4 are effectively reinforced, and in particular the lateral spring rate of the sidewalls is increased but without increasing the vertical spring rate. As 9 result, the cornering capacity is increased.

The reinforcing layers 6 and 7 may comprise one, two or three plies, and outward ends 6a, 7a and/or the inward ends, 6b, 7b may be differently positioned with respect to each other. The cords of the reinforcing layers 6, 7 may be made of organic fibres or inorganic fibres, for example, steel, glass or the like.

A tread region reinforcing breaker band 8 is disposed outside the reinforcing layers 6 and 7 and overlap the radially outer ends 6a and 7a by a width Wo. The band 8 comprises two layers of cords each laid substantially parallel to the circumferential direction of the tyre, that is, laid at an angle less than $10°$ with respect to the circumferential direction. The overlap width (Wo) is 5 to 20% of the tread width (Wt) and the total width (Wb) of the band 8 is within the range of 20 to 70% of the tread width (Wt).

The band 8 prevents the tread crown portion from lifting due to centrifugal force, and further increases durability in high speed running.

The cords of the band 8 have a modulus of elasticity of less than 300 g/d, and are preferably made of Nylon. If the modulus of elasticity is over 300 g/d, the rigidity of the tread crown portion is excessively increased and straight running properties and ride comfort are impaired.

Two detailed examples were tested compared with a radial competitors tyre. The test tyres were all size 120/80R16 and had specifications as set out in Table 1. The resultant performance were evaluated and the results are shown in Table 1.

Table 1

| | Comparative Example 1 | Invention Example 1 | Example 2 |
|---|---|---|---|
| Carcass: | | | |
| Structure | Radial | Radial | Radial |
| No. of ply | 2 | 2 | 2 |
| Cord angle | 90° | 90° | 90° |
| Material | Nylon | Nylon | Nylon |
| Denier | 2/1260d | 2/1260d | 2/1260d |
| Reinforcing Layer: | | | |
| No. of ply | --- | 2 | 2 |
| Cord angle | --- | 45° | 45° |
| Material | --- | Nylon | Nylon |
| Denier | --- | 2/1260d | 2/1260d |
| Band: | | | |
| No. of ply | 2 | 2 | 2 |
| Cord angle | 30° | 0° | 0° |
| Material | Nylon | Nylon | Nylon |
| Denier | 2/1260d | 840d | 840d |
| hf/H | --- | 0.5 | 0.5 |
| Wo/Wt | --- | 0.15 | 0.15 |
| Wc/Wt | --- | 0.2 | 0.4 |
| Test results: | | | |
| Maneuverability | 3 | 3.5 | 4 |
| Ride comfort | 3 | 4 | 4 |
| * Durability in high speed running | 220 km/h 5 min. | 240 km/h no breakage | 240 km/h no breakage |

* Internal air pressure: 2.8 kg/cm$^2$, Load: kg
(Cord angle is specified by the angle with respect to the circumferential direction of the tyre).

As apparent from the above results, the motorcycle tyres according to the present invention has superior maneuverability and durability in high speed running.

Thus the tyre of this invention which is provided with a reinforcing layer of a specific structure in place of the conventional radial tyre belt layer has increased flexibility in the tread crown portion, whereby the stability in straight running is maintained, and the ride comfort is improved. Further, the lateral rigidity is greatly enhanced due to the reinforced side wall, whereby the camber thrust generated during turning is increased.

Furthermore, the lifting of the tread crown region during high speed running is controlled by the cord and accordingly, the durability in high speed is improved.

# EP 0 219 311 B1

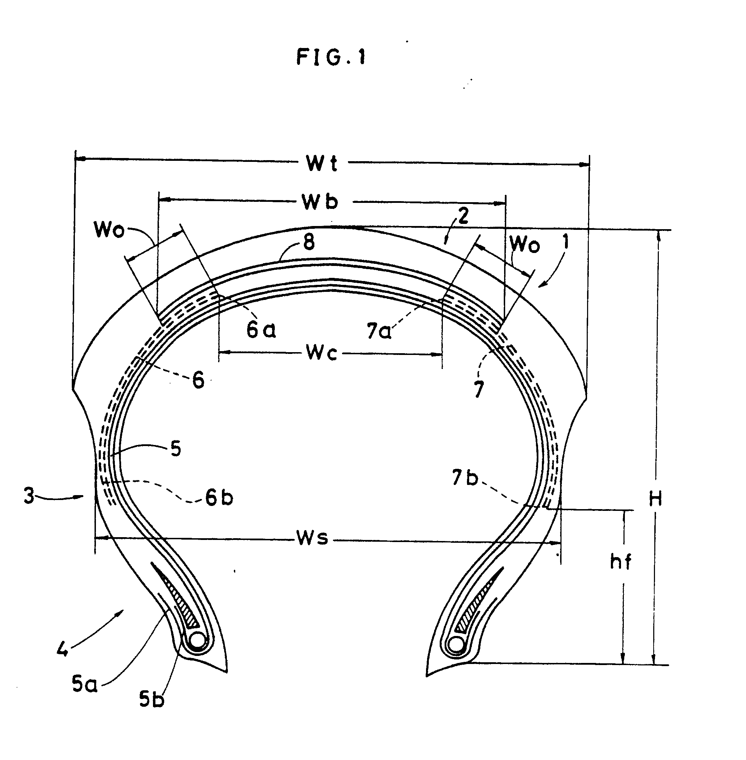

**Claims**

1. A motor-cycle tyre comprising a pair of bead regions (4), a tread region (2) forming a tread crown region, a pair of sidewalls (3), a carcass reinforcement of reinforcement cords (5) extending substantially parallel to the radial direction of the tyre and having the cord turned up around bead region reinforcement cores, a tread disposed radially outside the carcass (5) wherein the tread width (Wt) is wider than the maximum section width (Ws) of the tyre in the sidewall region and a tread reinforcement (6,7,8) disposed between the tread and the carcass (5) characterised by the tread reinforcement comprising a central tread reinforcing breaker band (8) having at least one ply of parallel organic cords with an elastic modulus of less than 300 g/d laid at an angle of less than 10 degrees to the circumferential direction of the tyre and a pair of axially spaced reinforcing layers (6,7) having at least one ply of parallel cords laid at an angle of 20 to 50 degrees to the circumferential direction of the tyre, the tread breaker band (8) having a width (Wb) and the reinforcing layers ( 6,7) disposed radially inside the breaker band (8) such that the band (8) lies upon the radially outer edges (6a,7a) reinforcing layers (6,7) and the distance (Wd) between the radially outer edges (6a, 7a) of the reinforcing layers is in the range 10 to 60% of the tread width (Wt) and the radially inner edge (6b,7b) of each reinforcing layer extends beyond the breaker band (8) edge toward the sidewall region (3) so that the (hf) of the inner edge (6b, 7b) from the bead base is in the range 10 to 70% of the section height (H) of the tyre from the bead base.

2. A motor-cycle tyre according to claim 1 characterised in that the tread breaker band (8) overslaps the radially outer edges (6a, 7a) of the reinforcement layers (6,7) by a distance (Wo) which is 5% to 20% of the tread width (Wt).

3. A motor-cycle tyre according to claim 1 or 2 characterized by the breaker band (8) cords being made from nylon.

4. A motor-cycle tyre according to claim 1, 2, or 3 characterised by the radially outer edges (6b, 7b) of the reinforcing layers (6,7) being spaced apart by a distance (Wc) which is 30% to 40% of the tread width (Wt).

**Revendications**

1. Pneumatique de motocyclette, comprenant deux régions de talon (4), une région de bande de roulement (2) formant une région centrale bombée de bande de roulement, deux flancs (3), une armature de carcasse formée de câblés (5) d'armature qui sont sensiblement parallèles à la direction radiale du pneumatique et telle que les câblés sont repliés autour de tringles d'armature de la région de talon, une bande de roulement disposée radialement à l'extérieur de la carcasse (5), la largeur (Wt) de la bande de roulement étant supérieure à la largeur maximale (Ws) de la section du pneumatique dans la région des flancs, et une armature de bande de roulement (6, 7, 8) placée entre la bande de roulement et la carcasse (5), caractérisé en ce que l'armature de la bande de roulement comporte une nappe sommet (8) d'armature centrale de la bande de roulement ayant au moins une nappe de câblés organiques parallèles ayant un module d'élasticité inférieur à 300 g/d et faisant un angle inférieur à 10° avec la direction circonférentielle du pneumatique, et deux couches d'armature (6, 7) distantes axialement et ayant au moins une nappe de câblés parallèles faisant un angle de 20 à 50° avec la direction circonférentielle du pneumatique, la largeur (Wb) de la nappe sommet (8) de la bande de roulement et la disposition radiale des couches d'armature (6, 7) vers l'intérieur de la nappe sommet (8) étant telles que la nappe sommet (8) est placée sur les bords radialement externes (6a, 7a) des couches d'armature (6, 7), et la distance (Wc) comprise entre les bords radialement externes (6a, 7a) des couches d'armature est comprise entre 10 et 60 % de la largeur (Wt) de la bande de roulement, et le bord radialement interne (6b, 7b) de chaque couche d'armature dépasse du bord de la nappe sommet (8) vers la région du flanc (3) de manière que la hauteur (hf) du bord interne (6b, 7b) par rapport à la base des talons est comprise entre 10 et 70% de la hauteur (H) de la section du pneumatique par rapport à la base des talons.

2. Pneumatique de motocyclette selon la revendication 1, caractérisé en ce que la nappe sommet (8) de la bande de roulement recouvre les bords radialement externes (6a, 7a) de la couche d'armature (6, 7)

5

EP 0 219 311 B1

sur une distance (Wo) qui est comprise entre 5 et 20 % de la largeur (Wt) de la bande de roulement.

3. Pneumatique de motocyclette selon la revendication 1 ou 2, caractérisé en ce que les câblés de la nappe sommet (8) sont formés de "Nylon".

4. Pneumatique de motocyclette selon la revendication 1, 2 ou 3, caractérisé en ce que les bords radialement externes (6b, 7b) des couches et l'armature (6, 7) sont séparés par une distance (Wc) qui est comprise entre 30 et 40% de la largeur (Wt) de la bande de roulement.

**Ansprüche**

1. Motorradreifen, der umfaßt ein Paar Wulstbereiche (4), einen einen Laufstreifen-Kronenbereich bildenden Laufstreifenbereich (2), ein Paar Seitenwände (3), eine Karkassverstärkung aus Verstärkungskorden (5), die sich im wesentlichen parallel zur Radialrichtung des Reifens erstreckt und die Korde um die Wulstbereich-Verstärkungskerne nach oben zurückgeschlagen hat, einen radial außerhalb der Karkasse (5) angeordneten Laufstreifen, bei dem die Laufstreifenbreite (Wt) breiter als die maximale Querschnittsbreite (Ws) des Reifens im Seitenwandbereich ist, und eine zwischen dem Laufstreifen und der Karkasse (5) angeordneten Laufstreifenverstärkung (6, 7, 8), dadurch gekennzeichnet, daß die Laufstreifenverstärkung ein zentrales Laufstreifenverstärkungs-Gürtelband (8) mit mindestens einer Lage paralleler organischer Korde mit einem Elastizitätsmodul von weniger als 300 g/d umfaßt, die mit einem Winkel von weniger als 10° zur Umfangsrichtung des Reifens gelegt sind, und ein Paar von mit axialem Abstand versehenen Verstärkungsschichten (6, 7) mit mindestens einer Lage paralleler Korde, die mit einem Winkel von 20 bis 50° zur Umfangsrichtung des Reifens gelegt sind, wobei das Laufstreifengürtelband (8) eine Breite (Wb) besitzt und die Verstärkungsschichten (6, 7) radial innerhalb des Gürtelbandes (8) so angeordnet sind, daß das Gürtelband (8) auf den radial äußeren Kanten (6a, 7a) der Verstärkungsschichten (6, 7) liegt, und der Abstand (Wo) zwischen den radial äußeren Kanten (6a, 7a) der Verstärkungsschichten im Bereich von 10 bis 60% der Laufstreifen breite (Wt) liegt und die radial innere Kante (6b, 7b) jeder Verstärkungsschicht sich so über die Kante des Gürtelbandes (8) zu dem Seitenwandbereich (3) erstreckt, daß die Höhe (hf) der inneren Kante (6b, 7b) über dem Wulstgrund im Bereich von 10 bis 70% der Querschnittshöhe (H) des Reifens vom Wulstgrund aus liegt.

2. Motorradreifen nach Anspruch 1, dadurch gekennzeichnet, daß das Laufstreifen-Gürtelband (8) die radial äußeren Kanten (6a, 7a) der Verstärkungsschichten (6, 7) um einen Abstand (Wo) überdeckt, der 5 bis 20% der Laufstreifenbreite (Wt) beträgt.

3. Motorradreifen nach Anspruch 1 oder 2, dadurch gekennzeichnet, daß die Korde des Gürtelbandes (8) aus Nylon gefertigt sind.

4. Motorradreifen nach Anspruch 1, 2 oder 3, dadurch gekennzeichnet, daß die radial äußeren Kanten (6b, 7b) der Verstärkungsschichten (6, 7) durch einen Abstand (Wc) getrennt sind, der 30 bis 40% der Laufstreifenbreite (Wt) beträgt.

6

FIG.1